# EUROPEAN PATENT SPECIFICATION

(11) **EP 2 730 639 B1**
(45) Date of publication and mention of the grant of the patent: **27.06.2018**
(21) Application number: 13192150.4
(22) Date of filing: 08.11.2013
(51) Int. Cl.: C10M 101/00, C10M 105/32, C10M 105/34, C10M 105/36, C10M 107/50, D01F 11/00, D06M 13/02, D06M 13/224, D06M 15/643, C08L 91/00, C10M 171/00, C09J 101/28, C09J 105/00, C08K 7/14, C08L 83/04, C09J 103/02

(54) **Processing agent for fibers**
Behandlungsmittel für Fasern
Agent de traitement pour fibres

(30) Priority: 09.11.2012 JP 2012247041
(43) Date of publication of application: 14.05.2014
(73) Proprietor: Takemoto Yushi Kabushiki Kaisha, Gamagori-shi, Aichi 443-8611 (JP)
(72) Inventor: Inagaki, Kuniyasu, Gamagori-shi, Aichi (JP); Takeuchi, Hirozumi, Gamagori-shi, Aichi (JP); Ichikawa, Toshiki, Gamagori-shi, Aichi (JP)
(74) Representative: EIP

(56) References cited:
- EP-A1- 0 315 873
- GB-A- 2 003 920
- US-A1- 2011 046 317
- A.A.REFAAT: "Correlation between the chemicla structure of biodiesel and its physicla properties", INT. J.ENVIRON, SCI TECH., vol. 6(4), 1 September 2009 (2009-09-01), pages 677-694, XP002720531,
- G.KNOTHE,; K.R.STEIDLEY: "Kinematic viscosity of biodiesel components (fatty acid alkyl esters) and related compounds at low temperatures", FUEL, no. 86, 7 March 2007 (2007-03-07), pages 2560-2567, XP002720532,

## Description

### Background of the invention

The present invention relates to a fiber-processing agent. In modern spinning processes, the transitions to faster spinning processes including high-speed ring spinning, high-speed rotor-type open-end spinning, whirling air spinning and so on is advancing to achieve reduced production costs and improved productivity.

However, as the spinning speed becomes faster in these trends, the amount of fibers passing through the spinning machine per unit time increases in proportion to the speed, so that scum accumulation increases, thereby shortening the cleaning cycle, and reducing the operational performance. The present invention relates to a fiber-processing agent for whirling air spinning in particular, and it relates to a fiber-processing agent that suppresses scum generation during the spinning of fibers with whirling air spinning machines and assures high-speed spinning performance.

Until now, various fiber-processing agents containing an alkyl phosphoric ester potassium salt have been proposed. Proposals for these fiber-processing agents include 1) two-component families with an alkyl phosphoric ester potassium salt and a phosphate of an alkylaminoether-type nonionic surfactant (refer to Japanese Patent Publication Tokkaisho 60-224867 for example), 2) three-component families including an alkyl phosphoric ester potassium salt, a phosphate of an alkylaminoether-type nonionic surfactant and a high molecular weight polyoxyethylene compound (refer to Japanese Patent Publication Tokkaisho 57-158297 for example), 3) two-component families with an alkyl phosphoric ester potassium salt and a high molecular weight polyoxyethylene compound (refer to Japanese Patent Publication Tokkaihei 3-174067 for example), and 4) three-component families including an alkyl phosphoric ester potassium salt, a paraffin wax emulsifier and a cationic surfactant (refer to Japanese Patent Publication Tokkaihei 6-108361 for example). However, these conventional fiber-processing agents have scum accumulation problems at the antinode ring in the case of high-speed ring spinning or inside the rotor in the case of high-speed rotor-type open-end spinning and on the spindle in the case of whirling air spinning. Among these, because the spinning speed of whirling air spinning is considerably faster than that of high-speed ring spinning or high-speed rotor-type open-end spinning, scum accumulation poses a relatively serious problem. Scum accumulation not only shortens the cleaning cycle and deteriorates the operational performance but also can reduce the yarn strength and can increase white powder formation and yarn breakage due to the serious damage caused to the fiber. While surfactant feeding equipment has been proposed for whirling air spinning to avoid scum accumulation (Japanese Patent Publication Tokkai 2008-95208 for example), surfactants containing an alkyl phosphoric ester potassium salt, which have been used as fiber-processing agents, cannot suppress scum accumulation to an optimum level.

GB 2003920 and US 2011/0046317 both describe agents used in fiber processing.

### Summary of the Invention

The problem to be solved by the present invention is to provide a fiber-processing agent that sufficiently suppresses scum accumulation and assures favorable high-speed spinning performance in whirling air spinning.

The inventors have found as a result of studies to solve the problem that the use of a special fiber-processing agent is beneficial and favorable for whirling air spinning.

That is, the present invention relates to use as a fiber-processing agent in whirling air spinning of a composition having a kinematic viscosity at 30°C of 5 x 10⁻⁶ to 50 x 10⁻⁶ m²/s, wherein the composition comprises 50 to 100 mass% of the following lubricant (A), 0 to 20 mass% of the following lubricant (B) and 0 to 50 mass% of the following lubricant (C), (total 100 mass%).

Lubricant (A) is an aliphatic ester compound of carbon number 15-60.

Lubricant (B) is a linear polyorganosiloxane having a kinematic viscosity at 30°C of 5 x 10⁻⁶ to 100 x 10⁻⁶ m²/s.

Lubricant (C) is a mineral oil having a kinematic viscosity at 30°C of 5 x 10⁻⁶ to 100 x 10⁻⁶ m²/s.

The fiber-processing agent related to the present invention (hereinafter referred to as the processing agent of the present invention) is a fiber-processing agent used for whirling air spinning. Whirling air spinning is a thread spinning method using a whirling flow (vortex) of compressed air and the whirling air spinning machine itself used for this spinning method is widely known (refer to Japanese Patent Publications Tokkai 2001-73235, Tokkai 2007-284813 and Tokkai 2011-38210 for example), such as, for example, product name VORTEX (registered trade mark) made by MURATA MACHINERY, LTD.

The processing agent of the present invention comprises 50 to 100 mass% of lubricant (A), 0 to 20 mass% of lubricant (B) and 0 to 50 mass% of lubricant (C) (total 100 mass%).

Lubricant (A) is an aliphatic ester compound of carbon number 15 to 60. The aliphatic ester compounds that match this condition include: 1) esters of an aliphatic monohydric alcohol and an aliphatic monocarboxylic acid such as methyl oleate, butyl stearate, octyl stearate, oleyl laurate, and isotridecyl stearate, 2) esters of an aliphatic polyhydric alcohol and aliphatic monocarboxylic acids such as 1,6-hexanediol dioleate and trimethylolpropane monooleate monolaurate, and 3) esters of aliphatic monohydric alcohols and an aliphatic polycarboxylic acid such as dilauryl adipate and dioleyl adipate.

Lubricant (B) is a linear polyorganosiloxane having a kinematic viscosity at 30°C of 5 x 10⁻⁶ to 100 x 10⁻⁶ m²/s. The linear polyorganosiloxanes having these characteristics include linear polydimethylsiloxanes, linear polydimethylsiloxanes having a modified group and so on. The modified group in this case can be an ethyl group, a phenyl group, a fluoropropyl group, an aminopropyl group, a carboxyoctyl group, a polyoxyethylene polyoxypropylene group, an ω-methoxypolyethoxy · polypropoxypropyl group or the like.

Lubricant (C) is a mineral oil having a kinematic viscosity at 30°C of 5 x 10⁻⁶ to 100 x 10⁻⁶ m²/s (5 cSt to 100 cSt).

The processing agent of the present invention has a kinematic viscosity at 30°C of 5 x 10⁻⁶ to 50 x 10⁻⁶ m²/s. While, in whirling air spinning, there is no limitation on the method for attaching the processing agent of the present invention to the fiber, the agent should be mixed in with compressed air which is used for whirling air spinning and sprayed on the fiber so that it is attached to the fiber and, in this case, the processing agent of the present invention, the kinematic viscosity at 30°C of which is, as mentioned before, 5 x 10⁻⁶ to 50 x 10⁻⁶ m²/s, can be sprayed more evenly on the fiber and be more evenly attached on the fiber as a result.

The processing agent of the present invention can be used with antifoaming agents, appearance adjusting agents, antioxidants, preservatives, antirust agents or other components according to respective purposes as far as the effects of the present invention are not undermined, while the amount of such components should be as low as possible.

As mentioned before, when the present processing agent is mixed in with compressed air and sprayed on the fiber for whirling air spinning, the processing agent of the present invention is used neat.

The invention described above suppresses scum accumulation at the spindle tip and holder and keeps good high-speed spinning performance in whirling air spinning.

While examples are described to indicate concrete configurations and effects of the present invention, the present invention is not limited to the specifics of these examples. In the following working examples and comparative examples, "parts" indicates mass parts and "%" indicates mass%.

### Test division 1 (preparation of the fiber-processing agents)

### Examples 1-5, reference examples 6-13 and comparative examples 1-15

Aliphatic ester compounds specified in Table 1 were used as lubricant (A), and linear polyorganosiloxanes or mineral oils specified in Table 2 were used as lubricant (B) or (C), and these were mixed in the ratios specified in Table 3 when necessary, to prepare the fiber-processing agent of each example specified in Table 3. Comparative example 15 indicates an example in which no fiber-processing agent was prepared or used.

### Test division 2 (preparation of a drafted sliver)

In the polyester staple production process, a semi dull polyester staple fiber having a linear mass density of 1.3 x 10⁻⁴ g/m and a fiber length of 38mm attached with 0.15% of an oil agent that consists of 70 parts of octadecyl phosphoric ester potassium salt, 15 parts of α-nonylphenyl-ω-hydroxy polyoxyethylene (n=10) and 15 parts of α-dodecylamino-ω-hydroxy polyoxyethylene (n=10) was used. This polyester staple fiber was fed to a flat card (made by Howa Machinery, Ltd.) to produce a card sliver, which is then fed to a PDF type drawing machine (made by ISHIKAWA SEISAKUSHO, LTD.) to prepare a 3.2g/m thick drafted sliver.

### Test division 3 (evaluation of the fiber-processing agents in whirling air spinning)

The spraying performance and scum accumulation of the fiber-processing agent of each example prepared in test division 1 were evaluated in the following method and the results are summarized in Table 3.

### Spraying performance

A mist of the fiber-processing agent was mixed with compressed air used for the spinning in a whirling air spinning machine (VORTEX (registered trade mark) made by MURATA MACHINERY, LTD.), and the compressed air was sprayed at a temperature of 25°C, relative humidity of 65% and pressure of 0.55MPa for five hours. The spraying state of the fiber-processing agent was visually observed and evaluated according to the following criterion. The results are summarized in Table 3.

### Criterion of spraying performance

A : Good
B : While a small amount of liquid accumulation is observed at the piping, the total spraying performance is good.
C : While liquid accumulation is observed at the piping, spraying can be achieved for a short time.
D : Spraying is impossible.

### Scum accumulation

When the drafted sliver prepared in test division 2 was fed to a whirling air spinning machine (VORTEX (registered trade mark) made by MURATA MACHINERY, LTD.) to spin Ne30 spun yarn at a spinning speed of 360m/min., a mist of the fiber-processing agent having a good spraying performance or one that was able to be sprayed was added and mixed with compressed air and sprayed at a temperature of 25°C, relative humidity of 65% and pressure of compressed air of 0.55MPa in an amount relative to the passing amount of drafted sliver of 0.03%.

After five hours, scum accumulation on the spindle tip and that on the spindle holder were visually observed and evaluated according to the following criterion. The results are summarized in Table 3.

### Criterion of evaluation of scum accumulation on the spindle tip and on the spindle holder

A : No accumulation
B : No need for cleaning in spite of slight accumulation
C : No need for frequent cleaning in spite of accumulation
D : Frequent cleaning is necessary due to accumulation

**Table 1**

| Type of lubricant | Name of compound | Carbon number of aliphatic alcohol | Carbon number of fatty acid | Total carbon number |
|---|---|---|---|---|
| A-1 | Methyl oleate | 1 | 18 | 19 |
| A-2 | Isotridecyl stearate | 13 | 18 | 31 |
| A-3 | 2-ethylhexyl stearate | 8 | 18 | 26 |
| A-4 | Isopropyl myristate | 3 | 14 | 17 |
| A-5 | Rapeseed oil | 3 | 54 | 57 |

**Table 2**

| Type of lubricant | Name of compound | Kinematic viscosity at 30°C [x 10⁻⁶ m²/s] |
|---|---|---|
| B-1 | Linear polydimethylsiloxane | 10 |
| B-2 | Linear polydimethylsiloxane | 30 |
| B-3 | Linear polydimethylsiloxane | 50 |
| B-4 | Monoamino-modified linear polydimethylsiloxane | 90 |
| BR-1 | Linear polydimethylsiloxane | 1000 |
| BR-2 | Linear polydimethylsiloxane | 10000 |
| C-1 | Mineral oil | 5 |
| C-2 | Mineral oil | 10 |
| C-3 | Mineral oil | 30 |
| C-4 | Mineral oil | 70 |
| CR-1 | Mineral oil | 200 |

**Table 3**

| Division | Composition of fiber-processing agent | | Mass parts of water to 100 mass parts of fiber -processing agent | Kinematic viscosity of fiber-processing agent [×10⁻⁶m²/s] | Spraying performance | Scum accumulation | |
|---|---|---|---|---|---|---|---|
| | Component | Ratio (%) | | | | At tip | At holder |
| Example 1 | A-1 | 100 | 0 | 5 | A | A | A |
| 2 | A-2 | 100 | 0 | 25 | A | A | A |
| 3 | A-3 | 100 | 0 | 13 | A | A | A |
| 4 | A-4 | 100 | 0 | 5 | A | A | A |
| 5 | A-5 | 50 | 0 | 35 | A | A | A |
| | C-1 | 50 | | | | | |
| Reference example | | | | | | | |
| 6 | B-1 | 100 | 0 | 10 | A | A | B |
| 7 | B-2 | 100 | 0 | 30 | A | A | B |
| 8 | B-3 | 100 | 0 | 50 | A | A | B |
| 9 | B-4 | 100 | 0 | 90 | B | A | B |
| 10 | C-1 | 100 | 0 | 5 | A | A | B |
| 11 | C-2 | 100 | 0 | 10 | A | A | B |
| 12 | C-3 | 100 | 0 | 30 | A | A | B |
| 13 | C-4 | 100 | 0 | 70 | B | A | B |
| Comparative example 1 | D-1 | 100 | 0 | 16 | A | B | D |
| 2 | D-2 | 100 | 0 | 30 | A | B | D |
| 3 | D-2 | 20 | 0 | 35 | A | B | D |
| | D-3 | 80 | | | | | |
| 4 | D-1 | 80 | 0 | 20 | A | B | D |
| | D-2 | 20 | | | | | |
| 5 | D-4 | 100 | 0 | 80 | C | C | D |
| 6 | D-5 | 100 | 0 | 220 | D | ∗1 | ∗1 |
| 7 | D-6 | 100 | 0 | 300 | D | ∗1 | ∗1 |
| 8 | D-7 | 100 | 0 | 60 | C | C | D |
| 9 | D-8 | 100 | 0 | 1000 or over | D | *1 | ∗1 |
| 10 | D-9 | 100 | 0 | 1000 or over | D | ∗1 | ∗1 |
| 11 | D-10 | 100 | 100 | 10 | C | D | D |
| 12 | BR-1 | 100 | 0 | 1000 | D | *1 | ∗1 |
| 13 | BR-2 | 100 | 0 | 10000 | D | ∗1 | ∗1 |
| 14 | CR-1 | 100 | 0 | 200 | D | ∗1 | * 1 |
| 15 | - | - | 0 | - | - | D | D |

In Table 3,
D-1: α-octyl-ω-hydroxypolyoxyethylene (n = 4)
D-2: α-dodecyl-ω-hydroxypolyoxyethylene (n = 6) polyoxypropylene (n = 2)
D-3: α-nonyl-ω-hydroxypolyoxyethylene (n = 6) polyoxypropylene (n = 2)
D-4: α-butyl-ω-hydroxypolyoxyethylene (n = 10) polyoxypropylene (n = 10)
D-5: α-butyl-ω-hydroxypolyoxyethylene (n = 20) polyoxypropylene (n = 20)
D-6: α-hydroxy-ω-hydroxypolyoxyethylene (n = 5) polyoxypropylene (n = 45)
D-7: α-cocoyl-ω-hydroxypolyoxyethylene (n = 10)
D-8: Octadecyl phosphoric acid ester potassium salt
D-9: Octyl phosphoric acid ester potassium salt
D-10: Butyl phosphoric acid ester potassium salt
*1: Due to poor spraying performance, evaluation of scum accumulation was impossible.

As shown in results of Table 3, this invention suppresses scum accumulation in whirling air spinning at the spindle tip and holder to a large extent, assuring good high-speed spinning performance.

## Claims

1. Use as a fiber-processing agent in whirling air spinning of a composition having a kinematic viscosity at 30°C of 5 x 10⁻⁶ to 50 x 10⁻⁶ m²/s; wherein the composition comprises 50 to 100 mass% of lubricant (A), 0 to 20 mass% of lubricant (B) and 0 to 50 mass% of lubricant (C), (total 100 mass%); wherein:
Lubricant (A) is an aliphatic ester compound of carbon number 15-60;
Lubricant (B) is a linear polyorganosiloxane, having a kinematic viscosity at 30°C of 5 x 10⁻⁶ to 100 x 10⁻⁶ m²/s; and
Lubricant (C) is a mineral oil, having a kinematic viscosity at 30°C of 5 x 10⁻⁶ to 100 x 10⁻⁶ m²/s.

## Patentansprüche

1. Verwendung als faserverarbeitendes Mittel beim Wirbelluftspinnen einer Zusammensetzung, die bei 30 °C eine kinematische Viskosität von 5 x 10⁻⁶ bis 50 x 10⁻⁶ m²/s aufweist; wobei die Zusammensetzung 50 bis 100 Masse-% an Schmiermittel (A), 0 bis 20 Masse-% an Schmiermittel (B) und 0 bis 50 Masse-% an Schmiermittel (C) umfasst (insgesamt 100 Masse-%); wobei:
Schmiermittel (A) eine aliphatische Esterverbindung der Kohlenstoffzahl 15-60 ist;
Schmiermittel (B) ein lineares Polyorganosiloxan ist, das bei 30 ºC eine kinematische Viskosität von 5 x 10⁻⁶ bis 100 x 10⁻⁶ m²/s aufweist; und
Schmiermittel (B) ein Mineralöl ist, das bei 30 ºC eine kinematische Viskosität von 5 x 10⁻⁶ bis 100 x 10⁻⁶ m²/s aufweist.

## Revendications

1. Utilisation en tant qu'agent de traitement de fibres dans le filage à air tourbillonnant d'une composition ayant une viscosité cinématique à 30°C comprise entre 5 × 10⁻⁶ et 50 × 10⁻⁶ m²/s ; où la composition comprend 50 à 100 % en masse de lubrifiant (A), 0 à 20 % en masse de lubrifiant (B) et 0 à 50 % en masse de lubrifiant (C), (total de 100 % en masse) ; où :
le lubrifiant (A) est un composé ester aliphatique ayant un nombre d'atomes de carbone compris entre 15 et 60 ;
le lubrifiant (B) est un polyorganosiloxane linéaire, ayant une viscosité cinématique à 30°C comprise entre 5 × 10⁻⁶ et 100 × 10⁻⁶ m²/s ; et
le lubrifiant (C) est une huile minérale, ayant une viscosité cinématique à 30°C comprise entre 5 × 10⁻⁶ et 100 × 10⁻⁶ m²/s.
